# EUROPEAN PATENT SPECIFICATION

(11) **EP 4 639 879 B1**
(45) Date of publication and mention of the grant of the patent: **09.09.2026**
(21) Application number: 23828180.2
(22) Date of filing: 14.12.2023
(51) Int. Cl.: H04L 67/025, A01B 79/00, G06Q 50/02, H04L 67/12

(54) **METHOD OF OPERATING A NETWORK OF CULTIVATION CONTAINERS AND SYSTEM OF INTERCONNECTED CULTIVATION CONTAINERS**
VERFAHREN ZUM BETRIEB EINES NETZWERKS VON KULTIVIERUNGSBEHÄLTERN UND SYSTEM AUS MITEINANDER VERBUNDENEN KULTIVIERUNGSBEHÄLTERN
PROCÉDÉ DE FONCTIONNEMENT D'UN RÉSEAU DE RÉCIPIENTS DE CULTURE ET SYSTÈME DE RÉCIPIENTS DE CULTURE INTERCONNECTÉS

(30) Priority: 22.12.2022 EP 22215851
(43) Date of publication of application: 29.10.2025
(73) Proprietor: suiteg GmbH, 50858 Köln (DE)
(72) Inventor: VESPER, Martin, 42399 Wuppertal (DE); DECKERS, Volker, 52538 Gangelt (DE)
(74) Representative: Kutzenberger Wolff & Partner
(86) International application number: PCT/EP2023/085819
(87) International publication number: WO 2024/132844

(56) References cited:
- EP-B1- 3 439 451
- RADIOMETRIX: "LORA P/N LRM3 product", 20 September 2019 (2019-09-20), XP093133314, Retrieved from the Internet <URL:https://lemosint.com/wp-content/uploads/2019/09/LRM3.pdf> [retrieved on 20240220]
- BEHRTECH BLOG: "The Greatest Use Case for Two-Way Communication in LPWAN", 25 March 2020 (2020-03-25), XP093133307, Retrieved from the Internet <URL:https://web.archive.org/web/20221128161629/https:/behrtech.com/blog/two-way-communication-in-lpwan/> [retrieved on 20240220]

## Description

### Background

The present invention relates to a network of cultivation containers and a method of operating the network.

Traditionally, plants are grown by farmers by way of field cultivation. For this purpose, specific atmospheric conditions are indispensable for successful cultivation. In particular, the soil must be rich in humus and hence provide sufficient amounts of nutrients. Furthermore, the soil as well as the ambient air must provide enough humidity so as to promote plant growth. Moreover, adequate radiation must be ensured. In addition and importantly, plant cultivation is inextricably linked to a provision of sufficient acreage.

The global population and therefore the demand for sufficient food is increasing incessantly. At the same time among others due to anthropogenic industrial emissions the climate is subject to long-term changes, especially to unfavorable changes from the standpoint of plant cultivation: Heat waves and water scarcity, but also a lack of soil nutrients as a consequence of monocultural farming et cetera are some of the challenging phenomena and examples for the deterioration of cultivation conditions that farmers are currently faced with and most likely will be confronted with on a regular basis in the future. According to scientific disclosures the adverse agricultural conditions will subsist and the challenging phenomena will occur even more frequently, when steady, predictable and controllable cultivation conditions are actually required for optimal agricultural outputs.

One approach in solving this problem can be found in the so-called inhouse or vertical farming technologies of growing crops in vertically stacked layers arranged inside buildings, containers or the like. This technology incorporates controlled-environment agriculture in order to optimize plant growth and to increase crop yield and goes along with a smaller cropland. Furthermore, vertical farming enables a decrease of human interference in the cultivation process due to automatization which increases the overall performance since machines don't need sleep or vacation and are not affected by sentiment fluctuations and thus are much less prone to errors. Automatization is expected to increase over time along with developments in machine learning and artificial intelligence. Also, vertical farming goes hand in hand with the benefit of reducing transportation efforts since the cultivation can be carried out in urban territories, close to consumers, thereby rendering pollutive and costly shipments superfluous.

However, a current drawback of this approach is that vertical farming is associated with a tremendous energy consumption compared to classical field cultivation due to the fact that lighting, climate control and nutrients must be provided entirely by technical means. Consequently, vertical farming can only be a solution to the afore-mentioned challenges when energy consumption and costs are reduced and degree of automation as well as crop yield are increased significantly.

One approach to optimize energy consumption is to keep the transport distances of the cultivated plants to the consumers short. That means the containers are placed where the demand is and, in addition, exactly as many containers will be placed there in each case to exactly meet the demand. At the same time, the containers should be placed as far as possible where energy costs are low, for example because solar or wind energy is widely available there.

As a result, the containers are located in many different places, some close to each other and some far away from each other.

It is known from the state of the art, e.g. from EP 3 439 451 A1 to integrate such containers into a farm networking service in order to control and monitor them through a central server unit.

The disadvantage of such a central administration is that in the case where containers in the same network are operated by different container operators it is typically considered critical by these container operators if their data is shared across the entire network and thus can be viewed by others. Every container operator wants to be sure that their data is protected from access by others and that no know-how is transferred. Furthermore, each container operator has a substantial interest in operating his container independently and does not want to follow centralized control instructions. Thus, the methods known in the prior art for centralized control of the containers in a network of many containers are not suitable for use cases in which the containers embedded into the network are operated by different operators and economically independent owners.

Another disadvantages can be that the server must always be accessible for the containers which means that communication breaks down entirely as soon as the server or its connection is down. Furthermore, a sufficiently powerful data connection to the server is required for each single container. This is a problem in remote regions and discredits the reliability of the entire network. In addition, a lot of data traffic is generated, which significantly worsens the carbon footprint of the container network. It is known that global data traffic and the servers and data centers required make a significant contribution to CO² emissions.

### Disclosure of the invention

It is an object of the present invention to provide a method of operating a network of cultivation containers and a system of interconnected cultivation containers in which control units of different containers can communicate with each other in the network but without the risk that the communication or exchanged data can be viewed or modified by a third party.

The object of the present invention is achieved by a method of operating a network of cultivation containers, wherein a plurality of cultivation containers are integrated into the network, wherein each of the plurality of cultivation containers comprises a cultivation device for cultivation of plants, a plant treating device for treating cultivated plants, a control device for controlling the plant treating device and a communication device for receiving data from the control device or providing data to the control device and wherein the control units of at least two cultivation containers in the network communicate directly and bidirectionally with each other.

Advantageously, the present invention enables direct and bidirectional communication between two containers inside the network. It is herewith a method of operating a network of cultivation containers and a system of interconnected cultivation containers provided in which control units of different containers can communicate with each other in the network but without the risk that the communication or exchanged data can be viewed or modified by a third party. In particular, the exchanged communication and data cannot be read or modified by a central server, a network node, a network operator, another container or the like. In this way, each container operator retains full control over their own data and their own growing process within the container. The know-how of each container is thereby secured. To achieve this, the two containers communicate directly and bidirectionally with each other over the network. Preferably the communication takes place via the internet and/or or mobile radio network. A direct and bidirectional communication particularly means an end-to-end communication in which application-specific features are kept at communication end points. The end-to-end principle removes critical components from intermediary communications nodes in order to increase routing options, improve data delivery rates and make sure applications only fail if the end point fails. This principle addresses the need for reliable communications in e.g. inherently unstable environments. The communication over the network preferably uses a peer-to-peer (P2P) architecture for the direct and bidirectional communication, so that the communicating containers are equally privileged, equipotent participants in the network. The communication containers maintain full control of their exchanged data at least on the application layer, presentation layer, session layer and/or transport layers (cp. host layers in the Open Systems Interconnection mode - OSI model). The connection itself is preferably established over the network and by the network provider, in particular on the level of Media layers in the OSI model. However, the communication itself cannot be read or modified by the network provider or other network participants.

It is also conceivable that the communication is provided in a more reliable manner and does not have a single point of failure, requires less data traffic and is therefore more environmentally friendly. In this manner, the communication between the two containers is not disturbed but maintained even when a potential server is down, or its connection is broken. This applies for a case, in which the communicating containers are directly connected or wired together. This could be the case, for example, if the containers are positioned close to each other. The server as the single point of failure is thus rendered unnecessary. Furthermore, the containers communicate directly and immediately with each other without the diversions via a server, so that significantly less data volume is incurred. This means that the containers can also be set up and operated efficiently in less well-developed areas with less infrastructure. The architecture of the network is particularly efficient in that there is no central network control or network management. The network can therefore be enlarged or reduced by simply adding or removing containers in the network without affecting the rest of the network structure. Preferably, the network thus organizes itself.

Another advantage of the method according to the present invention is that the data of one container is not shared throughout the entire network, but is only made available to the dedicated other container with which the information is exchanged directly and bidirectionally. Each container thus retains unrestricted sovereignty and control over its own data. In this way, containers from different operators could be integrated into a single network without compromising data security and data control.

According to the present invention, it is preferred that a communication device of a first cultivation container in the network broadcasts a demand request to the communication device of a second cultivation container or to respective communication devices of a group of second cultivation containers or to communication devices of all cultivation containers in the network. Advantageously, the demand request is sent directly from the first container to the second container according to the present invention. The demand request comprises preferably a demand for produce, a demand for energy, a demand for water, a demand for nutrient solution for plants, a demand for plant treatment agent and/or a demand for consumption or emission certificate. It is herewith advantageously possible that the control device of a certain container (i.e. the first container) which identifies an additional need for e.g. energy, water, nutrient solution or plant treatment agent asks another container (i.e. the second container) via its communication device to help out by providing the requested goods. It is also possible that a control unit which identifies a certain or increasing demand for produce by a customer which exceeds the actual own produce sent a corresponding demand request for a certain amount of produce to another container (i.e. the second container) to ask whether the missing portion of produce can be supplied from there. The request for a particular product may also consist of a request for a right or license to that particular product in the form of a consumption or emission certificate, such as a right to emit an amount of CO2 (also referred to as CO2 certificate) or consume a certain amount of water or the like. The control device of the other container (i.e. the second container) receives the demand request via its own communication device and can decide whether it can fully or at least partly comply with the demanded goods or not. It is conceivable that the demanding container sends the demand request at first only to those containers which are closest. In this scenario, more distant containers are contacted not before the closer containers refuse to meet the demand. This avoids unnecessary data traffic. It is also conceivable that the demand request includes a demand for human capital, i.e. for certain working hours of employees.

According to the present invention, it is preferred that a communication device of a first cultivation container in the network broadcasts a supply offer to the communication device of a second cultivation container or to respective communication devices of a group of second cultivation containers or to communication devices of all cultivation containers in the network. Advantageously, the supply offer is sent directly from the first container to the second container according to the present invention. The supply offer comprises preferably an offer to provide produce, energy, water, nutrient solution for plants, plant treatment agent and/or an offer for a consumption or emission certificate. It is herewith advantageously possible that the control device of a certain container (i.e. the first container) which identifies an oversupply of e.g. produce, energy, water, nutrient solution or plant treatment agent asks another container (i.e. the second container) via its communication device if the other container is able to take off some of the oversupply. The control device of the other container (i.e. the second container) receives the supply offer via its own communication device and can decide whether it can fully or at least partly help to reduce the oversupply by taking off some of it. It is conceivable that the offering container sends the supply offer at first only to those containers which are closest. In this scenario, more distant containers are contacted not before the closer containers refuse to meet take off the oversupply. Again, this avoids unnecessary data traffic.

The mechanisms described above, whereby the containers inform each other directly und bidirectionally about under- and overcapacities of certain goods and ask for help in reducing the under- and overcapacities can be used particularly efficiently with containers that are supplied with renewable energy sources. The use of renewable energies, such as solar energy or wind power, has the disadvantage that the energy supply is subject to strong fluctuations depending on the weather. However, if the different containers coordinate e.g. their energy needs or produce capacity with each other, these fluctuations can be balanced out. This possibility arises in particular when the containers are located in places with different weather systems.

According to the present invention, it is preferred that the communication device of the first cultivation container in the network receives a response message from the communication device of the second cultivation container or from respective communication devices of the group of second cultivation containers or from communication devices of all cultivation containers in the network. Advantageously, the addressee (i.e. second container) of the demand request or the supply offer (i.e. of the first container) can reply to the request or offer by means of the response request. For this purpose, the response message preferably comprises information whether the requested demand can be completely or partially satisfied directly by the second cultivation container or indirectly by reducing a corresponding demand of the second cultivation container and/or information whether the offered supply can be completely or partially used directly by the second cultivation container or indirectly by reducing production or use in the second cultivation container. Thus, an efficient exchange of information takes place directly and bidirectionally between the communication devices of two containers.

According to the present invention, it is preferred that a communication device of a first cultivation container in the network broadcasts operating information to the communication device of a second cultivation container or to respective communication devices of a group of second cultivation containers or to communication devices of all cultivation containers in the network. The operating information preferably comprise a growing recipe for a certain plant and/or timetable(s) with expected produce, plant cycles, production workload, energy demand, water demand, demand for nutrient solution, demand for plant treatment agent, accruing waste water and/or accruing plant waste. In this way, it is advantageously possible for the containers to inform each other about certain events or findings. It is conceivable, for example, that particularly advantageous cultivation parameters bringing a better harvest crop determined by a control unit is transmitted to other containers in the form of the growing recipe so that they can adjust their cultivation parameters accordingly. Furthermore, it is conceivable that a container provides its neighbouring containers with a schedule from which the expected capacity utilization, production and/or resource consumption emerge, so that a group of containers can prevent undercapacities and overcapacities of produce or resources among themselves by coordinating their schedules. For this purpose, the treating device of a cultivation container is controlled by the control device in such a manner according to a preferred embodiment of the present invention that a plant cycle is timed based on demand requests, supply offers and/or operating information of other cultivation containers.

According to the present invention, it is preferred that the demand request, the supply request, the operating information and/or the response message comprises positioning and/or distance data. Advantageously, the position data can be used to determine the distance between two containers communicating with each other. The distance information can then be taken into account when sending demand requests or supply offers, especially with regard to the container to which the demand request or supply offer is addressed. In the same way, the requested container can also take the distance information into account when deciding whether a demand request or supply offer can be granted in whole or in part. For example, distance can play a major role in whether the produce can be delivered in a certain time, as the length of the required transport route also takes time. Preferably, the communication device of the first cultivation container broadcasts its demand request and/or supply offer to the closest cultivation container(s) based on the calculated distance, in particular the calculated effective distance. Unnecessary data traffic can be avoided in this manner.

According to the present invention, it is preferred that the each of the plurality of cultivation containers comprises a positioning device for providing the positioning data to the communication device, wherein the communication device(s) of the first and/or the second cultivation container calculate(s) a distance between the first and the second cultivation container based on the positioning data. Advantageously, an exact position determination and from this, in turn, an exact distance calculation is possible. Preferably, the position device comprises a Global Positioning Systems (GPS) device or a Galileo device determining a position by use of a Global Navigation Satellite System (GNSS).

According to the present invention, it is preferred that the calculated distance comprises an effective distance taking into account connection and transporting properties for the demanded or offered goods. The distance is thus not only the direct route as the crow flies, but the actual transport route for the corresponding good which depends on the actual route, for example the course of roads, railway tracks, lines, cables or the like, as well as the means of transport used, such as rail, ship, or truck. When using a truck, traffic information can also be included and when using rail or ship, corresponding timetables can be included. Taking all these parameters into account makes it possible to determine an effective distance, which then advantageously reflects the actual transport time between the two containers in question for a particular good.

According to the present invention, it is preferred that the communication device of the first cultivation container classifies the other cultivation container into different priorities based on the calculated distance, in particular the calculated effective distance, and wherein the demand requests and/or supply offers are broadcasted to the other cultivation containers by the first cultivation container sequentially according to the priority classification. It is herewith advantageously possible that the demand request and/or supply offers are sequentially sent to a cultivation container with a lower priority only when the demand request and/or supply offer is not granted by a cultivation container with higher priority. In this manner, the amount of data traffic can be minimized. Furthermore, the communication in the network acts as a self-learning system due to the fact that all containers decide own their own about their priority list independently of a central control unit, like a server or the like.

According to the present invention, it is preferred that the communication device of the second cultivation container forwards the demand request, supply offer, response message and/or operating information received from the first cultivation container to a third cultivation container in the network. It is conceivable that the demand request or supply offer is passed on from one container to the next container as long as no container accepts the whole demand request or supply offer completely or there are at least still open requests or offers. Requests or offers are preferably forwarded according to a predefined pattern or a priority list determined by the requesting or offering container. Forwarding the individual request or offer prevents unnecessary data transfer, as the request or offer is only forwarded if it is still open.

Another subject of the present invention to achieve the above mentioned object is a system of a network of interconnected cultivation containers, which is i.e. operated by the afore mentioned method of operating a network of cultivation containers according to the present invention. The system comprises a plurality of cultivation containers, wherein each of the plurality of cultivation containers comprises a cultivation device for cultivation of plants, a plant treating device for treating cultivated plants, a control device for controlling the plant treating device and a communication device for receiving data from the control device or providing data to the control device, characterized in that the plurality of cultivation containers are integrated into the network in such a manner that the communication device of one cultivation container in the network is configured to communicate bidirectionally and directly with any other communication device of another cultivation container in the network.

All mentioned characteristics, features and advantages of the method according to the present invention apply equally to the system according to the present invention and vice versa.

These and other characteristics, features and advantages of the present invention will become also apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

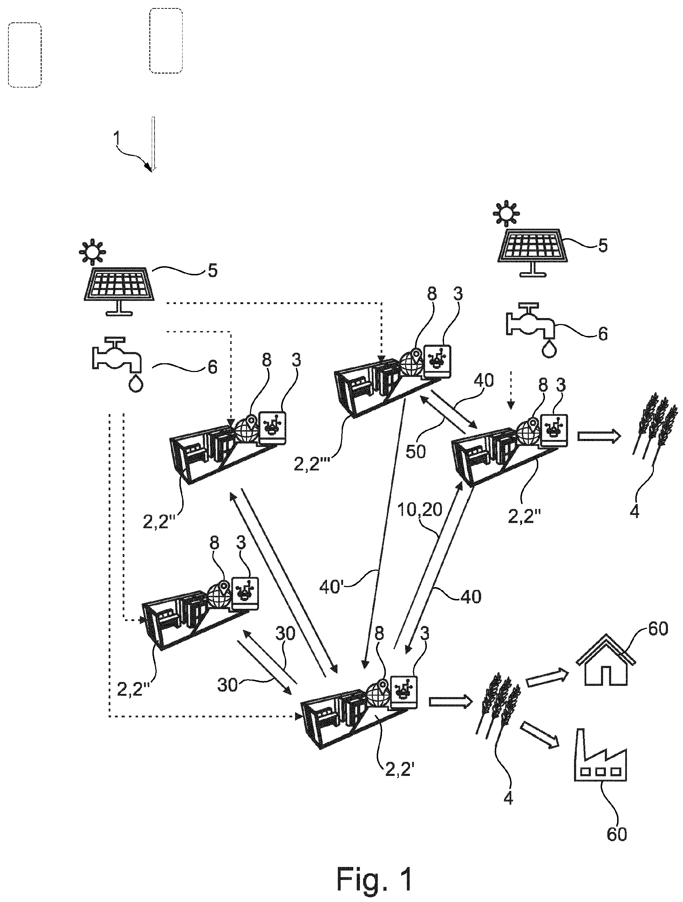

- Figure 1: illustrates schematically an embodiment of a method and system according to the present invention.

### Detailed description

The present invention will be described with respect to particular embodiments and with reference to certain drawings but the invention is not limited thereto but only by the claims. The drawings described are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described and/or illustrated herein.

In **figure 1****,** a method and a system 100 according to the present invention is schematically illustrated.

The system 100 comprises a plurality of cultivation containers 2 interconnected in a network 1. Each cultivation container 2 comprises so called inhouse or vertical farming technologies of growing crops, in particular vertically stacked layers arranged inside the containers 2. For this purpose, each container 2 comprises a cultivation device for cultivation of plants and a plant treating device for treating plants cultivated in the cultivation device.

The cultivation device preferably comprises vertically stacked cultivation vessels for supporting crops during growing. It is also conceivable that the cultivation device comprises vertically oriented walls provided with channels extending vertically or horizontally over the wall surface and used as supports for plants and their roots. The plant treating device is preferably configured to provide water and/or nutrient solutions to the plants. Preferably, the plant treating device comprises also means for sowing plant seeds into the cultivation device and/or for cutting plants and/or for treating potential plant diseases. Preferably, the plant treating device comprises harvesting means for harvesting the grown-up cultivated plants before starting a new planting cycle.

Furthermore, each container also comprises a control device for controlling at least the plant treating device. For example, the amount of water or nutrient solution supplied by the plant treating device is actively controlled by the control device. It is conceivable that also the type of nutrient solution or fertilizer is selected by the control device. Apart from that also the time of sowing new seeds into the cultivation devices and/or of harvesting the grown-up plants can be determined by the control unit which means that the whole planting cycle is controlled by the control unit.

Furthermore, each container comprises a communication device 3 for receiving data from the control device and/or for providing data to the control device. Each communication device 3 is configured to communicate directly and bidirectionally with the communication device 3 of another cultivation container 2 in the network 1. It is herewith advantageously possible that control devices of different cultivation container 2 communicate directly with each other via their respective communication devices 3. A central communication server for coordinating communication between these containers 2 is either not necessary or even not implemented. The communication between the two containers 2, 2" preferably takes place via an end-to-end communication and/or a peer-to-peer connection in the network.

This approach makes it possible that the control device 3 of a certain container 2, 2' (hereinafter referred to as the first container 2' by way of example) is capable to communicate current or expected overcapacities or undercapacities to the control device 3 of another container 2, 2" (hereinafter referred to as the second container 2" by way of example).

The communication preferably comprises a demand request 10 or a supply offer 20 being broadcasted from the first container 2, 2' to the second container 2, 2". After evaluating the possibilities of granting the demand request 10 or the supply offer 20 in part or in full, the second container 2, 2" sends a corresponding response message 40 back to the first container 2, 2'.

The response message 40 indicates whether the requested demand can be completely or partially satisfied directly by the second cultivation container 2, 2" or indirectly by reducing a corresponding demand of the second cultivation container 2, 2" or whether the offered supply can be completely or partially used directly by the second cultivation container 2, 2" or indirectly by reducing production or use in the second cultivation container 2, 2".

It is conceivable that the second container 2, 2" forwards (see forwarding step 50) the received demand request 10 or supply offer 20 to a third container 2, 2‴ in the network 1, if the demand request 10 or supply offer 20 cannot be granted in full by the second container 2, 2". The third container 2, 2‴ sends its response message 40 either directly to the first container 2, 2' (see arrow 40') or indirectly over the second container 2, 2" to the first container 2, 2".

Apart from that, the communication can also comprise operating information 30 in order to inform the second container 2, 2" about current growing parameters of the first container 2, 2' and to allow coordination between both containers 2, 2', 2".

The operating information 30 can comprise a growing recipe for a certain plant or timetable(s) with expected produce 4, plant cycles, production workload, energy demand 5, water demand 6, demand for nutrient solution, demand for plant treatment agent, accruing waste water and/or accruing plant waste.

The second container 2' in the sense of the present invention can either be a single second container 2' or a group of second containers 2'.

The present invention is explained in more detail with reference to the following specific examples:

### EXAMPLE 1

The demand request 10 can comprise e.g. a demand for produce 4. For example, if the local market (see local customers 60) requests a certain demand of produce 4 of plants which exceeds the production capacity of the first container 2', the first container 2' sends a demand request 10 for the missing produce to the second container 2" in order to ask whether the second container 2" is capable of providing at least partially the missing produce 4.

If possible, the second container 2" indicates to the first container 2' via the response message 40 that the missing produce 4 can be provided by the second container 2' (see doted arrow). It is conceivable that the second container 2' raises its own productivity or starts a new growing cycle for this purpose.

If the demand cannot be satisfied, the demand request 10 is forwarded 50 to a third container 2‴ in the network 1 by the second container 2" or the first container 2' is informed by the second container 2" by means of the response message 40 that the demand cannot be satisfied.

### EXAMPLE 2

The demand request 10 can comprise a demand request 10 for energy 5. If the first container 2' indicates an undersupply of energy due to e.g. cloudy weather when supplied by solar energy or calm weather when supplied by wind energy, demand request 10 is broadcasted to the second container 2".

If the second container 2" has an overcapacity of energy due to the local weather conditions or because it is supplied by another type of energy source, the missing energy can be supplied by the second container 2". It is also conceivable that the second container 2" is capable to reduce its own energy consumption due to a lower demand of produce 4 of its local market 60 or because it is in a phase in which their plants need less energy, in particular shortly after sowing. In this case, the second container 2" informs the first container 2, 2' by use of the response message 40 that the missing energy can be provided by the second container 2, 2".

If the demand cannot be satisfied, the demand request 10 is forwarded 50 by the second container 2, 2" to a third container 2, 2‴ or the first container 2, 2' is informed by the second container 2, 2" that the requested demand cannot be satisfied.

### EXAMPLE 3

The demand request 10 can comprise a demand for water 6 and/or nutrient solution for plants and/or plant treatment agent. If the first container 2, 2' determines a potential undersupply of water, nutrient solution or plant treatment agent, a corresponding demand request 10 is broadcasted to the second container 2, 2" asking whether the second container 2, 2" can help out with the requested goods. In this case, the demand request comprises preferably a request for a certain right or license to that particular product, like a water consumption certificate that entitles the holder to consume a certain amount of water.

Alternatively, it is not a demand request 10 but a supply offer 20 for water 6 and/or nutrient solution for plants and/or plant treatment agent which is broadcasts from the first container 2, 2' to the second container 2, 2", if the first container 2, 2" detects an oversupply of water 6, nutrient solution or treatment agent.

### EXAMPLE 4

As mentioned above, the communication can also comprise a supply offer 20. If the first container 2, 2' detects an overproduction of produce, the leftover is offered to the second container 2, 2" by means of the supply offer 20. The second container 2" indicates to the first container 2' by use of the response message 40 whether the leftover of produce 4 will be taken over in part or in full. It is conceivable that the second container 2" reduces its own production, e.g. by delaying an upcoming sowing process, in response to the upcoming handover of produce 4 from the first container 2'.

It is also conceivable that the leftover is offered by multiple individual supply offers 20 to a group of second containers 2, 2" in a bidding process, wherein every container 2 , 2" of the group can place a bid for the leftover in part or in full and the first container 2, 2' dedicates the leftover to the one container 2, 2" providing the highest bid.

### EXAMPLE 5

The containers 2, 2" preferably comprise positioning devices 8 for determining their respective positions. The position data is transmitted with every communication 10, 20, 30, 40, 50, so that containers 2 which are communicating with each other can calculate their distance. Preferably, they calculate not only their actual geographical distance as the crow flies, but the effective distance from each other, which takes into account the transport movement and the means of transport for a particular good, like energy 5, produce 4, water 6 or the like. In this way the actual transport time can be considered.

It is conceivable that the first container 2, 2' creates a priority list of second containers 2, 2" for a certain good. The priority list lists those second containers 2, 2" having the shortest effective distance for this particular good to the first container 2, 2' with higher priority. For example, if the produce is transported with trucks, the containers 2, 2' which are closest and best reached by truck have the highest priority.

In case, that the first container 2, 2' requests a certain good, the demand request 10 is sent to the one second container 2, 2" first which is of highest priority in the priority list for this particular good. If this second container 2, 2" is not capable of providing the requested goods, the demand request 10 is sent to a container 2, 2" which is second in the priority list and so on and so forth until the request is granted.

### EXAMPLE 6

If a group of containers 2 are supplied by the same energy source, the containers 2 inform each other about their upcoming growing cycles by use of the operating information 30. It is herewith possible that a second container 2, 2" receiving such an operating information 30 from a first container 2, 2' delays its own planned growing cycle in such a manner that periods with higher energy consumption of both containers 2 overlap as little as possible.

### REFERENCE SIGNS

- 1: Network
- 2: Cultivation containers
- 3: Communication device
- 4: Produce
- 5: Energy
- 6: Water
- 8: Positioning device
- 10: demand request
- 20: supply offer
- 30: Operating information
- 40: Response message
- 50: Forwarding step
- 60: Local customers
- 100: System

## Claims

1. Method of operating a network (1) of cultivation containers (2), wherein a plurality of cultivation containers (2) are integrated into the network (1), wherein each of the plurality of cultivation containers (2) comprises a cultivation device for cultivation of plants, a plant treating device for treating cultivated plants, a control device for controlling the plant treating device and a communication device (3) for receiving data from the control device or providing data to the control device, **characterized in that** communication devices (3) of at least two cultivation containers (2, 2', 2") in the network (1) communicate directly and bidirectionally with each other,
wherein the at least two cultivation containers (2, 2', 2") in the network (1) communicate via peer-to-peer (P2P) and/or end-to-end communication with each other,
wherein a communication device (3) of a first cultivation container (2, 2') in the network (1) broadcasts a demand request (10) to the communication device (3) of a second cultivation container (2, 2") or to respective communication devices (3) of a group of second cultivation containers (2, 2") or to communication devices (3) of all cultivation containers (2) in the network (1).

2. Method according to claim 1, wherein the demand request (10) comprises a demand for produce (4), a demand for energy (5), a demand for water (6), a demand for nutrient solution for plants, a demand for plant treatment agent and/or a demand for a consumption or emission certificate.

3. Method according to any of the preceding claims, wherein a communication device (3) of a first cultivation container (2, 2') in the network (1) broadcasts a supply offer (20) to the communication device (3) of a second cultivation container (2, 2") or to respective communication devices (3) of a group of second cultivation containers (2, 2") or to communication devices (3) of all cultivation containers (2) in the network (1).

4. Method according to claim 3, wherein the supply offer (20) comprises an offer for produce (4), an offer for energy (5), an offer for water (6), an offer for nutrient solution for plants, an offer for plant treatment agent and/or an offer for a consumption or emission certificate.

5. Method according to any of the preceding claims, wherein a communication device (3) of a first cultivation container (2, 2') in the network (1) broadcasts operating information (30) to the communication device (3) of a second cultivation container (2, 2") or to respective communication devices (3) of a group of second cultivation containers (2, 2") or to communication devices (3) of all cultivation containers (2) in the network (1).

6. Method according to claim 5, wherein the operating information (30) comprise a growing recipe for a certain plant and/or timetable(s) with expected produce (4), plant cycles, production workload, energy demand (5), water demand (6), demand for nutrient solution and/or demand for plant treatment agent.

7. Method according to any of the preceding claims, wherein the communication device (3) of the first cultivation container (2, 2') in the network (1) receives a response message (40) from the communication device (3) of the second cultivation container (2, 2") or from respective communication devices (3) of the group of second cultivation containers (2, 2") or from communication devices (3) of all cultivation containers (2) in the network (1).

8. Method according to claim 7, wherein the response message (40) comprises information whether the requested demand can be completely or partially satisfied directly by the second cultivation container (2, 2") or indirectly by reducing a corresponding demand of the second cultivation container (2, 2").

9. Method according to claim 7, wherein the response message (40) comprises information whether the offered supply can be completely or partially used directly by the second cultivation container (2, 2") or indirectly by reducing production or use in the second cultivation container (2, 2").

10. Method according to any of the preceding claims, wherein the demand request (10), the supply request (20), the operating information (30) and/or the response message (40) comprises positioning and/or distance data.

11. Method according to claim 10, wherein each of the plurality of cultivation containers (2) comprises a positioning device (8) for providing the positioning data to the communication device (3), wherein the communication device(s) (3) of the first and/or the second cultivation container (2, 2', 2") calculate(s) a distance between the first and the second cultivation container (2, 2', 2") based on the positioning data.

12. Method according to claim 11, wherein the calculated distance comprises an effective distance taking into account connection and transporting properties for the demanded or offered goods.

13. Method according to any of the claims 11 or 12 wherein the communication device (3) of the first cultivation container (2, 2') broadcasts its demand request and/or supply offer to the closest cultivation container(s) based on the calculated distance, in particular the calculated effective distance.

14. Method according to one of the claims 10 to 13, wherein the communication device (3) of the first cultivation container (2, 2') classifies the other cultivation container (2, 2") into different priorities based on the calculated distance, in particular the calculated effective distance, and wherein the demand requests (10) and/or supply offers (20) are broadcasted to the other cultivation containers by the first cultivation container (2, 2') sequentially according to the priority classification.

15. Method according to any of the preceding claims, wherein the treating device of a cultivation container (2, 2') is controlled by the control device in such a manner that a plant cycle is timed based on demand requests (10), supply offers (20) and/or operating information (30) of other cultivation containers (2, 2").

16. Method according to any of the preceding claims, wherein the communication device (3) of the second cultivation container (2, 2") forwards (50) the demand request, supply offer, response message (40) and/or operating information (30) received from the first cultivation container (2, 2') to a third cultivation container (2, 2‴) in the network (1).

17. System (100) of a network (1) of interconnected cultivation containers (2), in particular operated by a method according to one of the preceding claims, wherein the system (1) comprises a plurality of cultivation containers (2), wherein each of the plurality of cultivation containers (2) comprises a cultivation device for cultivation of plants, a plant treating device for treating cultivated plants, a control device for controlling the plant treating device and a communication device (3) for receiving data from the control device or providing data to the control device, **characterized in that** the plurality of cultivation containers (2) are integrated into the network (1) in such a manner that the communication device (3) of one cultivation container (2) in the network (1) is configured to communicate bidirectionally and directly with any other communication device (3) of another cultivation container (2) in the network (1), wherein the system (100) is configured such that
the one cultivation container (2, 2', 2") communicates with the other cultivation container (2, 2', 2") via peer-to-peer (P2P) and/or end-to-end (E2E) communication, and
a communication device (3) of a first cultivation container (2, 2') in the network (1) broadcasts a demand request (10) to the communication device (3) of a second cultivation container (2, 2") or to respective communication devices (3) of a group of second cultivation containers (2, 2") or to communication devices (3) of all cultivation containers (2) in the network (1).

## Patentansprüche

1. Verfahren zum Betreiben eines Netzwerks (1) von Anbaubehältern (2), wobei eine Mehrzahl von Anbaubehältern (2) in das Netzwerk (1) integriert ist, wobei jeder der Mehrzahl von Anbaubehältern (2) eine Anbauvorrichtung zum Anbau von Pflanzen, eine Pflanzenbehandlungsvorrichtung zum Behandeln angebauter Pflanzen, eine Steuervorrichtung zum Steuern der Pflanzenbehandlungsvorrichtung sowie eine Kommunikationsvorrichtung (3) zum Empfangen von Daten von der Steuervorrichtung oder zum Bereitstellen von Daten an die Steuervorrichtung umfasst, **dadurch gekennzeichnet, dass** Kommunikationsvorrichtungen (3) von mindestens zwei Anbaubehältern (2, 2', 2") im Netzwerk (1) direkt und bidirektional miteinander kommunizieren,
wobei die mindestens zwei Anbaubehälter (2, 2', 2") im Netzwerk (1) über Peer-to-Peer (P2P)- und/oder End-to-End-Kommunikation miteinander kommunizieren,
wobei eine Kommunikationsvorrichtung (3) eines ersten Anbaubehälters (2, 2') im Netzwerk (1) eine Bedarfsanforderung (10) an die Kommunikationsvorrichtung (3) eines zweiten Anbaubehälters (2, 2") oder an die jeweiligen Kommunikationsvorrichtungen (3) einer Gruppe von zweiten Anbaubehältern (2, 2") oder an die Kommunikationsvorrichtungen (3) aller Anbaubehälter (2) im Netzwerk (1) übermittelt.

2. Verfahren nach Anspruch 1, wobei die Bedarfsanforderung (10) einen Bedarf an Ertrag (4), einen Bedarf an Energie (5), einen Bedarf an Wasser (6), einen Bedarf an Nährlösung für Pflanzen, einen Bedarf an Pflanzenschutzmittel und/oder einen Bedarf an einem Verbrauchs- oder Emissionszertifikat umfasst.

3. Verfahren nach einem der vorangehenden Ansprüche, wobei eine Kommunikationsvorrichtung (3) eines ersten Anbaubehälters (2, 2') im Netzwerk (1) eine Angebotsmitteilung (20) an die Kommunikationsvorrichtung (3) eines zweiten Anbaubehälters (2, 2") oder an die jeweiligen Kommunikationsvorrichtungen (3) einer Gruppe von zweiten Anbaubehältern (2, 2") oder an die Kommunikationsvorrichtungen (3) aller Anbaubehälter (2) im Netzwerk (1) übermittelt.

4. Verfahren nach Anspruch 3, wobei die Angebotsmitteilung (20) ein Angebot an Ertrag (4), ein Angebot an Energie (5), ein Angebot an Wasser (6), ein Angebot an Nährlösung für Pflanzen, ein Angebot an Pflanzenschutzmittel und/oder ein Angebot eines Verbrauchs- oder Emissionszertifikats umfasst.

5. Verfahren nach einem der vorangehenden Ansprüche, wobei eine Kommunikationsvorrichtung (3) eines ersten Anbaubehälters (2, 2') im Netzwerk (1) eine Betriebsinformation (30) an die Kommunikationsvorrichtung (3) eines zweiten Anbaubehälters (2, 2") oder an die jeweiligen Kommunikationsvorrichtungen (3) einer Gruppe von zweiten Anbaubehältern (2, 2") oder an die Kommunikationsvorrichtungen (3) aller Anbaubehälter (2) im Netzwerk (1) übermittelt.

6. Verfahren nach Anspruch 5, wobei die Betriebsinformation (30) ein Anbaurezept für eine bestimmte Pflanze und/oder Zeitplan/Zeitpläne mit erwartetem Ertrag (4), Pflanzenzyklen, Produktionsauslastung, Energiebedarf (5), Wasserbedarf (6), Bedarf an Nährlösung und/oder Bedarf an Pflanzenschutzmittel umfasst.

7. Verfahren nach einem der vorangehenden Ansprüche, wobei die Kommunikationsvorrichtung (3) des ersten Anbaubehälters (2, 2') im Netzwerk (1) eine Antwortnachricht (40) von der Kommunikationsvorrichtung (3) des zweiten Anbaubehälters (2, 2") oder von den jeweiligen Kommunikationsvorrichtungen (3) der Gruppe von zweiten Anbaubehältern (2, 2") oder von den Kommunikationsvorrichtungen (3) aller Anbaubehälter (2) im Netzwerk (1) empfängt.

8. Verfahren nach Anspruch 7, wobei die Antwortnachricht (40) Informationen darüber umfasst, ob der angeforderte Bedarf vollständig oder teilweise direkt durch den zweiten Anbaubehälter (2, 2") oder indirekt durch Reduzierung eines entsprechenden Bedarfs des zweiten Anbaubehälters (2, 2") gedeckt werden kann.

9. Verfahren nach Anspruch 7, wobei die Antwortnachricht (40) Informationen darüber umfasst, ob das Angebot vollständig oder teilweise direkt durch den zweiten Anbaubehälter (2, 2") genutzt oder indirekt durch Reduzierung der Produktion oder des Verbrauchs im zweiten Anbaubehälter (2, 2") verwertet werden kann.

10. Verfahren nach einem der vorangehenden Ansprüche, wobei die Bedarfsanforderung (10), die Angebotsmitteilung (20), die Betriebsinformation (30) und/oder die Antwortnachricht (40) Positions- und/oder Entfernungsdaten umfasst.

11. Verfahren nach Anspruch 10, wobei jeder der Mehrzahl von Anbaubehältern (2) eine Positionierungsvorrichtung (8) zur Bereitstellung der Positionsdaten an die Kommunikationsvorrichtung (3) umfasst, wobei die Kommunikationsvorrichtung(en) (3) des ersten und/oder des zweiten Anbaubehälters (2, 2', 2") einen Abstand zwischen dem ersten und dem zweiten Anbaubehälter (2, 2', 2") anhand der Positionsdaten berechnet/berechnen.

12. Verfahren nach Anspruch 11, wobei der berechnete Abstand einen effektiven Abstand umfasst, der Anschluss- und Transporteigenschaften für die nachgefragten oder angebotenen Güter berücksichtigt.

13. Verfahren nach einem der Ansprüche 11 oder 12, wobei die Kommunikationsvorrichtung (3) des ersten Anbaubehälters (2, 2') seine Bedarfsanforderung und/oder Angebotsmitteilung an den/die nächstgelegenen Anbaubehälter auf der Grundlage des berechneten Abstands, insbesondere des berechneten effektiven Abstands, übermittelt.

14. Verfahren nach einem der Ansprüche 10 bis 13, wobei die Kommunikationsvorrichtung (3) des ersten Anbaubehälters (2, 2') die anderen Anbaubehälter (2, 2") anhand des berechneten Abstands, insbesondere des berechneten effektiven Abstands, in verschiedene Prioritäten einteilt, und wobei die Bedarfsanforderungen (10) und/oder Angebotsmitteilungen (20) vom ersten Anbaubehälter (2, 2') gemäß der Prioritätseinstufung sequenziell an die anderen Anbaubehälter übermittelt werden.

15. Verfahren nach einem der vorangehenden Ansprüche, wobei die Behandlungsvorrichtung eines Anbaubehälters (2, 2') durch die Steuervorrichtung derart gesteuert wird, dass ein Pflanzenzyklus auf der Grundlage von Bedarfsanforderungen (10), Angebotsmitteilungen (20) und/oder Betriebsinformationen (30) anderer Anbaubehälter (2, 2") zeitlich abgestimmt wird.

16. Verfahren nach einem der vorangehenden Ansprüche, wobei die Kommunikationsvorrichtung (3) des zweiten Anbaubehälters (2, 2") die vom ersten Anbaubehälter (2, 2') empfangene Bedarfsanforderung, Angebotsmitteilung, Antwortnachricht (40) und/oder Betriebsinformation (30) an einen dritten Anbaubehälter (2, 2‴) im Netzwerk (1) weiterleitet (50).

17. System (100) eines Netzwerks (1) von miteinander verbundenen Anbaubehältern (2), insbesondere betrieben durch ein Verfahren nach einem der vorangehenden Ansprüche, wobei das System (1) eine Mehrzahl von Anbaubehältern (2) umfasst, wobei jeder der Mehrzahl von Anbaubehältern (2) eine Anbauvorrichtung zum Anbau von Pflanzen, eine Pflanzenbehandlungsvorrichtung zum Behandeln angebauter Pflanzen, eine Steuervorrichtung zum Steuern der Pflanzenbehandlungsvorrichtung sowie eine Kommunikationsvorrichtung (3) zum Empfangen von Daten von der Steuervorrichtung oder zum Bereitstellen von Daten an die Steuervorrichtung umfasst, **dadurch gekennzeichnet, dass** die Mehrzahl von Anbaubehältern (2) derart in das Netzwerk (1) integriert ist, dass die Kommunikationsvorrichtung (3) eines Anbaubehälters (2) im Netzwerk (1) konfiguriert ist, bidirektional und direkt mit jeder anderen Kommunikationsvorrichtung (3) eines anderen Anbaubehälters (2) im Netzwerk (1) zu kommunizieren, wobei das System (100) derart konfiguriert ist, dass
der eine Anbaubehälter (2, 2', 2") mit dem anderen Anbaubehälter (2, 2', 2") über Peer-to-Peer (P2P)- und/oder End-to-End (E2E)-Kommunikation kommuniziert,
und eine Kommunikationsvorrichtung (3) eines ersten Anbaubehälters (2, 2') im Netzwerk (1) eine Bedarfsanforderung (10) an die Kommunikationsvorrichtung (3) eines zweiten Anbaubehälters (2, 2") oder an die jeweiligen Kommunikationsvorrichtungen (3) einer Gruppe von zweiten Anbaubehältern (2, 2") oder an die Kommunikationsvorrichtungen (3) aller Anbaubehälter (2) im Netzwerk (1) übermittelt.

## Revendications

1. Procédé d'exploitation d'un réseau (1) de conteneurs de culture (2), dans lequel une pluralité de conteneurs de culture (2) sont intégrés dans le réseau (1), chacun de la pluralité de conteneurs de culture (2) comprenant un dispositif de culture pour la culture de plantes, un dispositif de traitement des plantes pour traiter les plantes cultivées, un dispositif de commande pour commander le dispositif de traitement des plantes et un dispositif de communication (3) pour recevoir des données du dispositif de commande ou fournir des données au dispositif de commande, **caractérisé en ce que** les dispositifs de communication (3) d'au moins deux conteneurs de culture (2, 2', 2") dans le réseau (1) communiquent directement et de manière bidirectionnelle entre eux,
dans lequel les au moins deux conteneurs de culture (2, 2', 2") dans le réseau (1) communiquent entre eux via une communication pair-à-pair (P2P) et/ou de bout en bout,
dans lequel un dispositif de communication (3) d'un premier conteneur de culture (2, 2') dans le réseau (1) diffuse une demande de besoin (10) au dispositif de communication (3) d'un deuxième conteneur de culture (2, 2") ou aux dispositifs de communication (3) respectifs d'un groupe de deuxièmes conteneurs de culture (2, 2") ou aux dispositifs de communication (3) de tous les conteneurs de culture (2) dans le réseau (1).

2. Procédé selon la revendication 1, dans lequel la demande de besoin (10) comprend un besoin en produit agricole (4), un besoin en énergie (5), un besoin en eau (6), un besoin en solution nutritive pour les plantes, un besoin en agent de traitement des plantes et/ou un besoin en certificat de consommation ou d'émission.

3. Procédé selon l'une quelconque des revendications précédentes, dans lequel un dispositif de communication (3) d'un premier conteneur de culture (2, 2') dans le réseau (1) diffuse une offre d'approvisionnement (20) au dispositif de communication (3) d'un deuxième conteneur de culture (2, 2") ou aux dispositifs de communication (3) respectifs d'un groupe de deuxièmes conteneurs de culture (2, 2") ou aux dispositifs de communication (3) de tous les conteneurs de culture (2) dans le réseau (1).

4. Procédé selon la revendication 3, dans lequel l'offre d'approvisionnement (20) comprend une offre de produit agricole (4), une offre d'énergie (5), une offre d'eau (6), une offre de solution nutritive pour les plantes, une offre d'agent de traitement des plantes et/ou une offre d'un certificat de consommation ou d'émission.

5. Procédé selon l'une quelconque des revendications précédentes, dans lequel un dispositif de communication (3) d'un premier conteneur de culture (2, 2') dans le réseau (1) diffuse une information de fonctionnement (30) au dispositif de communication (3) d'un deuxième conteneur de culture (2, 2") ou aux dispositifs de communication (3) respectifs d'un groupe de deuxièmes conteneurs de culture (2, 2") ou aux dispositifs de communication (3) de tous les conteneurs de culture (2) dans le réseau (1).

6. Procédé selon la revendication 5, dans lequel l'information de fonctionnement (30) comprend une recette de culture pour une plante déterminée et/ou un ou des calendrier(s) avec le produit agricole (4) attendu, les cycles végétaux, la charge de production, la demande en énergie (5), la demande en eau (6), la demande en solution nutritive et/ou la demande en agent de traitement des plantes.

7. Procédé selon l'une quelconque des revendications précédentes, dans lequel le dispositif de communication (3) du premier conteneur de culture (2, 2') dans le réseau (1) reçoit un message de réponse (40) du dispositif de communication (3) du deuxième conteneur de culture (2, 2") ou des dispositifs de communication (3) respectifs du groupe de deuxièmes conteneurs de culture (2, 2") ou des dispositifs de communication (3) de tous les conteneurs de culture (2) dans le réseau (1).

8. Procédé selon la revendication 7, dans lequel le message de réponse (40) comprend des informations indiquant si le besoin demandé peut être satisfait en totalité ou en partie directement par le deuxième conteneur de culture (2, 2") ou indirectement par la réduction d'un besoin correspondant du deuxième conteneur de culture (2, 2").

9. Procédé selon la revendication 7, dans lequel le message de réponse (40) comprend des informations indiquant si l'offre d'approvisionnement proposée peut être utilisée en totalité ou en partie directement par le deuxième conteneur de culture (2, 2") ou indirectement par la réduction de la production ou de l'utilisation dans le deuxième conteneur de culture (2, 2").

10. Procédé selon l'une quelconque des revendications précédentes, dans lequel la demande de besoin (10), l'offre d'approvisionnement (20), l'information de fonctionnement (30) et/ou le message de réponse (40) comprend des données de positionnement et/ou de distance.

11. Procédé selon la revendication 10, dans lequel chacun de la pluralité de conteneurs de culture (2) comprend un dispositif de positionnement (8) pour fournir les données de positionnement au dispositif de communication (3), le ou les dispositif(s) de communication (3) du premier et/ou du deuxième conteneur de culture (2, 2', 2") calcule/calculent une distance entre le premier et le deuxième conteneur de culture (2, 2', 2") sur la base des données de positionnement.

12. Procédé selon la revendication 11, dans lequel la distance calculée comprend une distance effective tenant compte des propriétés de connexion et de transport pour les biens demandés ou offerts.

13. Procédé selon l'une des revendications 11 ou 12, dans lequel le dispositif de communication (3) du premier conteneur de culture (2, 2') diffuse sa demande de besoin et/ou son offre d'approvisionnement au(x) conteneur(s) de culture le(s) plus proche(s) sur la base de la distance calculée, en particulier de la distance effective calculée.

14. Procédé selon l'une des revendications 10 à 13, dans lequel le dispositif de communication (3) du premier conteneur de culture (2, 2') classe les autres conteneurs de culture (2, 2") selon différentes priorités sur la base de la distance calculée, en particulier de la distance effective calculée, et dans lequel les demandes de besoin (10) et/ou les offres d'approvisionnement (20) sont diffusées aux autres conteneurs de culture par le premier conteneur de culture (2, 2') de manière séquentielle selon le classement par priorité.

15. Procédé selon l'une quelconque des revendications précédentes, dans lequel le dispositif de traitement d'un conteneur de culture (2, 2') est commandé par le dispositif de commande de telle manière qu'un cycle végétal est planifié dans le temps sur la base des demandes de besoin (10), des offres d'approvisionnement (20) et/ou des informations de fonctionnement (30) d'autres conteneurs de culture (2, 2").

16. Procédé selon l'une quelconque des revendications précédentes, dans lequel le dispositif de communication (3) du deuxième conteneur de culture (2, 2") transfère (50) la demande de besoin, l'offre d'approvisionnement, le message de réponse (40) et/ou l'information de fonctionnement (30) reçus du premier conteneur de culture (2, 2') à un troisième conteneur de culture (2, 2‴) dans le réseau (1).

17. Système (100) d'un réseau (1) de conteneurs de culture (2) interconnectés, exploité notamment selon un procédé conforme à l'une des revendications précédentes, dans lequel le système (1) comprend une pluralité de conteneurs de culture (2), chacun de la pluralité de conteneurs de culture (2) comprenant un dispositif de culture pour la culture de plantes, un dispositif de traitement des plantes pour traiter les plantes cultivées, un dispositif de commande pour commander le dispositif de traitement des plantes et un dispositif de communication (3) pour recevoir des données du dispositif de commande ou fournir des données au dispositif de commande, **caractérisé en ce que** la pluralité de conteneurs de culture (2) est intégrée dans le réseau (1) de telle manière que le dispositif de communication (3) d'un conteneur de culture (2) dans le réseau (1) est configuré pour communiquer de manière bidirectionnelle et directe avec tout autre dispositif de communication (3) d'un autre conteneur de culture (2) dans le réseau (1), le système (100) étant configuré de telle sorte que
le premier conteneur de culture (2, 2', 2") communique avec l'autre conteneur de culture (2, 2', 2") via une communication pair-à-pair (P2P) et/ou de bout en bout (E2E),
et qu'un dispositif de communication (3) d'un premier conteneur de culture (2, 2') dans le réseau (1) diffuse une demande de besoin (10) au dispositif de communication (3) d'un deuxième conteneur de culture (2, 2") ou aux dispositifs de communication (3) respectifs d'un groupe de deuxièmes conteneurs de culture (2, 2") ou aux dispositifs de communication (3) de tous les conteneurs de culture (2) dans le réseau (1).
